# EUROPEAN PATENT APPLICATION

(11) **EP 4 697 770 A1**
(43) Date of publication of application: **18.02.2026**
(21) Application number: 24806404.0
(22) Date of filing: 07.05.2024
(51) Int. Cl.: H04W 12/04

(54) **SECURE COMMUNICATION METHOD AND APPARATUS**

(30) Priority: 15.05.2023 CN 202310544449
(71) Applicant: Huawei Technologies Co., Ltd., Shenzhen, Guangdong 518129 (CN)
(72) Inventor: LI, Fei, Shenzhen, Guangdong 518129 (CN); HENDA, Noamen Ben, Shenzhen, Guangdong 518129 (CN)
(74) Representative: Isarpatent
(86) International application number: PCT/CN2024/091411
(87) International publication number: WO 2024/235050

(57) **Abstract**

This application provides a secure communication method and apparatus. The method includes: A first device sends first information of the first device to a second device through a first message, where the first message includes one or more of a first port number, a first security parameter index SPI, a first internet protocol IP address, a first security algorithm list, and a first random number; the first device receives a second message that includes second information and that is from the second device, where the second message includes one or more of a second port number, a second SPI, a second IP address, a second security algorithm list, and a second random number; and based on the first information and/or the second information, the first device determines, in a first calculation manner, a first salt value used for uplink transmission between the first device and the second device, and/or determines, in a second calculation manner, a second salt value used for downlink transmission between the first device and the second device. This can ensure security of uplink and downlink communication between the first device and the second device.

## Description

This application claims priority to Chinese Patent Application No. 202310544449.3, filed with the China National Intellectual Property Administration on May 15, 2023 and entitled "SECURE COMMUNICATION METHOD AND APPARATUS", which is incorporated herein by reference in its entirety.

### TECHNICAL FIELD

This application relates to the field of wireless communication, and more specifically, to a secure communication method and apparatus.

### BACKGROUND

Security issues of mobile communication are increasingly concerned. Security in an internet protocol (internet protocol, IP) multimedia subsystem (IP multimedia subsystem, IMS) is based on a long-term security key. After a terminal device and a network device complete authentication, the terminal device and a first interaction point (for example, a proxy call session control function (proxy call session control function, P-CSCF)) obtain a shared key. Further, an internet protocol security (internet protocol security, IPsec) channel may be established between the terminal device and the P-CSCF based on the shared key. The IPsec channel is used for uplink/downlink communication between the terminal device and the P-CSCF, and keys, salt values, and initialization vectors (initialization vector, IV) used for uplink/downlink communication between the terminal device and the P-CSCF may be the same.

For uplink and downlink communication between the terminal device and the P-CSCF, how to ensure security of uplink and downlink communication is a problem that needs to be resolved currently.

### SUMMARY

This application provides a secure communication method and apparatus, to ensure security of uplink and downlink communication between a terminal device and a P-CSCF.

According to a first aspect, a secure communication method is provided. The method may be performed by a terminal device, or may be performed by a chip or a circuit disposed in a terminal device. Alternatively, the method may be performed by a network device, or may be performed by a chip or a circuit disposed in a network device. This is not limited in this application.

### The method may include:

A first device sends first information of the first device to a second device through a first message, where the first message includes one or more of a first port number, a first security parameter index SPI, a first internet protocol IP address, a first security algorithm list, and a first random number; the first device receives a second message that includes second information and that is from the second device, where the second message includes one or more of a second port number, a second security parameter index SPI, a second internet protocol IP address, a second security algorithm list, and a second random number; and based on the first information and/or the second information, the first device determines, in a first calculation manner, a first salt value used for uplink transmission between the first device and the second device, and/or determines, in a second calculation manner, a second salt value used for downlink transmission between the first device and the second device.

According to the method provided in this application, for uplink transmission between the first device and the second device, the first device may determine the first salt value in the first calculation manner based on the first information of the first device and the second information from the second device; and correspondingly, the second device determines the first salt value in the first calculation manner based on the second information of the second device and the first information from the first device. It can be learned that, in uplink transmission between the first device and the second device, the first device and the second device can determine a same salt value in a same calculation manner, that is, security of uplink communication between the first device and the second device can be ensured. For downlink transmission between the first device and the second device, the first device may determine the second salt value in the second calculation manner based on the first information of the first device and the second information from the second device; and correspondingly, the second device determines the second salt value in the second calculation manner based on the second information of the second device and the first information from the first device. It can be learned that, in downlink transmission between the first device and the second device, the first device and the second device can determine a same salt value in a same calculation manner, that is, security of downlink communication between the first device and the second device can be ensured.

With reference to the first aspect, in some possible implementations, the first information is included in one of the first port number, the first security parameter index SPI, the first internet protocol IP address, the first security algorithm list, and the first random number that are in the first message; and/or the second information is included in one of the second port number, the second security parameter index SPI, the second internet protocol IP address, the second security algorithm list, and the second random number that are in the second message.

Based on the foregoing technical solution, the first device sends the first message to the second device, where the first message includes one or more of the first port number, the first security parameter index SPI, the first internet protocol IP address, the first security algorithm list, and the first random number, and the first information included in the first message may be carried in any one of the first port number, the first security parameter index SPI, the first internet protocol IP address, the first security algorithm list, and the first random number that are in the first message. The first device receives the second message sent by the second device, the second message includes one or more of the second port number, the second security parameter index SPI, the second internet protocol IP address, the second security algorithm list, and the second random number, and the second information included in the second message may be carried in any one of the second port number, the second security parameter index SPI, the second internet protocol IP address, the second security algorithm list, and the second random number that are in the second message.

In a possible implementation, when the first information is carried in any one of the first port number, the first security parameter index SPI, the first internet protocol IP address, the first security algorithm list, and the first random number, the first information may be represented in bits.

In another possible implementation, when the first information is carried in any one of the first security algorithm list and the first port number, the first information may alternatively be represented by using an entry in the list, for example, represented by adding an algorithm identifier.

With reference to the first aspect, in some possible implementations, the determining the first salt value in the first calculation manner includes:
calculating the first salt value using a first security parameter, where
the first security parameter includes one or more of the following: a direction indicator of uplink transmission, a direction identifier of uplink transmission, an uplink port number of the first device and/or an uplink port number of the second device, an uplink IP address of the first device and/or an uplink IP address of the second device, an uplink SPI of the first device and/or an uplink SPI of the second device, an uplink counter of the first device and/or an uplink counter of the second device, and a random number of the first device and/or a random number of the second device; and
the determining the second salt value in the second calculation manner includes: calculating the second salt value using a second security parameter, where
the second security parameter includes one or more of the following: a direction indicator of downlink transmission, a direction identifier of downlink transmission, a downlink port number of the first device and/or a downlink port number of the second device, a downlink IP address of the first device and/or a downlink IP address of the second device, a downlink SPI of the first device and/or a downlink SPI of the second device, a downlink counter of the first device and/or a downlink counter of the second device, and a random number of the first device and/or a random number of the second device.

It should be understood that both the uplink SPI and the uplink port number of the first device and the downlink SPI and the downlink port number of the first device may be locally generated by the first device, and both the uplink SPI and the uplink port number of the second device and the downlink SPI and the downlink port number of the second device may be locally generated by the second device.

In a possible implementation, the uplink port number of the first device, the uplink IP address of the first device, the uplink SPI of the first device, the uplink counter of the first device, and the random number of the first device may be sent to the second device through the first message, so that the second device calculates the first salt value using the first security parameter; and the uplink port number of the second device, the uplink IP address of the second device, the uplink SPI of the second device, the uplink counter of the second device, and the random number of the second device may be sent to the first device through the second message, so that the first device calculates the first salt value using the first security parameter.

In another implementation, the uplink port number of the first device, the downlink IP address of the first device, the downlink SPI of the first device, the downlink counter of the first device, and the random number of the first device may be sent to the second device through the first message, so that the second device calculates the second salt value using the second security parameter; and the downlink port number of the second device, the downlink IP address of the second device, the downlink SPI of the second device, the downlink counter of the second device, and the random number of the second device may be sent to the first device through the second message, so that the first device calculates the second salt value using the second security parameter.

With reference to the first aspect, in some possible implementations, the first device determines a first vector used for uplink transmission using the first security parameter, and/or determines a second vector used for downlink transmission using the second security parameter; and
the first device sends the first vector and/or the second vector to the second device.

Based on the foregoing technical solution, the first device determines the first vector and/or the second vector using related parameters (for example, port numbers, direction indicators, direction identifiers, IP addresses, SPIs, counters, and random numbers) for distinguishing between uplink and downlink transmission, and sends the first vector and/or the second vector to the second device. The first vector is different from the second vector, so that it can be further ensured that the first vector and the second vector used for uplink and downlink transmission between the first device and the second device are different, thereby ensuring security of uplink and downlink communication between the first device and the second device.

According to a second aspect, a secure communication method is provided. The method may be performed by a terminal device, or may be performed by a chip or a circuit disposed in a terminal device. Alternatively, the method may be performed by a network device, or may be performed by a chip or a circuit disposed in a network device. This is not limited in this application.

### The method includes:

A first device determines a first vector used for uplink transmission between the first device and a second device using a first security parameter, and/or determines a second vector used for downlink transmission between the first device and the second device using a second security parameter.

The first security parameter includes one or more of the following: a direction indicator of uplink transmission, a direction identifier of uplink transmission, an uplink port number of the first device and/or an uplink port number of the second device, an uplink IP address of the first device and/or an uplink IP address of the second device, an uplink SPI of the first device and/or an uplink SPI of the second device, an uplink counter of the first device and/or an uplink counter of the second device, and a random number of the first device and/or a random number of the second device. The second security parameter includes one or more of the following: a direction indicator of downlink transmission, a direction identifier of downlink transmission, a downlink port number of the first device and/or a downlink port number of the second device, a downlink IP address of the first device and/or a downlink IP address of the second device, a downlink SPI of the first device and/or a downlink SPI of the second device, a downlink counter of the first device and/or a downlink counter of the second device, and a random number of the first device and/or a random number of the second device;

The first device sends the first vector and/or the second vector to the second device.

Based on the foregoing technical solution, the first device determines the first vector and/or the second vector using related parameters (for example, port numbers, direction indicators, direction identifiers, IP addresses, SPIs, counters, and random numbers) for distinguishing between uplink and downlink transmission, and sends the first vector and/or the second vector to the second device. The first vector is determined based on the first security parameter related to uplink transmission, and the second vector is determined based on the second security parameter related to downlink transmission, that is, the first vector used in uplink transmission between the first device and the second device is different from the second vector used in downlink transmission between the first device and the second device. This can ensure security of uplink and downlink communication between the first device and the second device.

According to a third aspect, a secure communication apparatus is provided. The apparatus is configured to perform the method provided in the first aspect and/or the method provided in the second aspect. Specifically, the apparatus may include a unit and/or a module, such as a processing unit and/or a transceiver unit (or referred to as a communication unit) configured to perform the method provided in any implementation of the first aspect or the second aspect.

In an implementation, the apparatus is a communication device (for example, a terminal device or a network device). When the apparatus is a communication device, the communication unit may be a transceiver or a transceiver unit, or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit in a communication device (for example, a terminal device or a network device). When the apparatus is the chip, the chip system, or the circuit in the communication device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fourth aspect, a communication apparatus is provided. The apparatus includes: a memory, configured to store a computer program or instructions; and at least one processor, configured to execute the computer program or the instructions stored in the memory, to perform the method provided in any implementation of the first aspect and the second aspect.

**In** an implementation, the apparatus is a communication device (for example, a terminal device or a network device).

**In** another implementation, the apparatus is a chip, a chip system, or a circuit in a communication device (for example, a terminal device or a network device).

According to a fifth aspect, this application provides a processor, configured to perform the method according to the foregoing aspects.

Operations such as sending and obtaining/receiving related to the processor may be understood as operations such as outputting and inputting performed by the processor, or operations such as sending and receiving performed by a radio frequency circuit and an antenna, unless otherwise specified, or provided that the operations do not conflict with actual functions or internal logic of the operations in related descriptions. This is not limited in this application.

According to a sixth aspect, a computer-readable storage medium is provided. The computer-readable medium stores program code to be executed by a device, and the program code is used to perform the method provided in any implementation of the first aspect and the second aspect.

According to a seventh aspect, a computer program product including instructions is provided. When the computer program product runs on a computer, the computer is enabled to perform the method provided in any implementation of the first aspect or the second aspect.

According to an eighth aspect, a chip is provided. The chip includes a processor and a communication interface. The processor reads, through the communication interface, instructions stored in a memory, to perform the method provided in any implementation of the first aspect and the second aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any implementation of the first aspect and the second aspect.

### BRIEF DESCRIPTION OF DRAWINGS

FIG. 1 is a diagram of a network architecture applicable to methods according to embodiments of this application;
FIG. 2 is a schematic flowchart of a secure communication method according to an embodiment of this application;
FIG. 3 is a schematic flowchart of a secure communication method according to another embodiment of this application;
FIG. 4 is a diagram of a secure communication apparatus 400 according to an embodiment of this application;
FIG. 5 is a diagram of a secure communication apparatus 500 according to another embodiment of this application; and
FIG. 6 is a diagram of a chip system 600 according to an embodiment of this application.

### DESCRIPTION OF EMBODIMENTS

The following describes technical solutions of this application with reference to accompanying drawings.

The technical solutions of embodiments of this application may be applied to various communication systems, for example, a global system of mobile communication (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunication system (Universal Mobile Telecommunication System, UMTS), a worldwide interoperability for microwave access (Worldwide Interoperability for Microwave Access, WiMAX) communication system, a fifth generation (5th Generation, 5G) communication system, a new radio (New Radio, NR) system, a sixth generation (6th Generation, 6G) system, or a future communication system.

It should be understood that embodiments of this application do not specifically limit a specific structure of an execution body of methods provided in embodiments of this application, provided that communication can be performed according to the methods provided in embodiments of this application by running a program that records code of the methods provided in embodiments of this application. For example, the methods provided in embodiments of this application may be executed by a terminal side device or a network side device, or a functional module that is in a terminal side device or a network side device and that can invoke the program and execute the program.

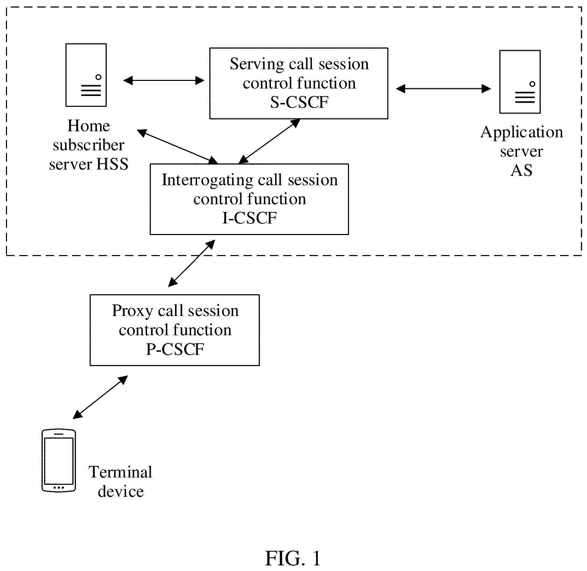

For ease of understanding of embodiments of this application, an application scenario of embodiments of this application is first described in detail with reference to FIG. 1.

FIG. 1 is a diagram of a network architecture applicable to the methods according to embodiments of this application. As shown in FIG. 1, the network architecture may specifically include the following network elements:
1. Terminal device (user equipment, UE): The terminal device may be referred to as user equipment, a terminal, an access terminal, a subscriber unit, a subscriber station, a mobile station, a remote station, a remote terminal, a mobile device, a user terminal, a wireless communication device, a user agent, or a user apparatus. The terminal device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device or another processing device connected to a wireless modem, a vehicle-mounted device, a wearable device, a terminal device in a future 5G network, or a terminal device in a future evolved public land mobile network (Public Land Mobile Network, PLMN). This is not limited in embodiments of this application.
2. Proxy call session control function (proxy call session control function, P-CSCF): The proxy call session control function is a unified initial entry point of a control plane of a visited IMS network, and mainly transfers a session initiation protocol (session initiation protocol, SIP) message proxy from a visited access network to a serving call session control function (serving call session control function, S-CSCF) or an interrogating call session control function (interrogating call session control function, I-CSCF) of a home location.
   The P-CSCF is further configured to provide integrity and security of SIP information between an IMS and the terminal device.
3. Interrogating call session control function (I-CSCF): When a subscriber roams, the I-CSCF serves as an access point for the terminal device to access a home network.
   The I-CSCF may interact with a home subscriber server (home subscriber server, HSS) to obtain an address of an S-CSCF to which the subscriber belongs. The I-CSCF may forward SIP requests and responses to the S-CSCF.
4. Serving call session control function (S-CSCF): The S-CSCF is the core of session control in an entire IMS core network. The S-CSCF receives a registration request forwarded by the P-CSCF from an IMS subscriber in a visited network, cooperates with the HSS to authenticate an IMS terminal device, downloads basic IMS subscription data from the HSS, and performs a basic session routing function for calling and called IMS terminals.
5. Home subscriber server (HSS): The HSS is a centralized and integrated database used to store subscription information of IMS subscribers in the home network. The subscription information of the IMS subscribers includes identification information, routing information, service subscription information, and the like. The HSS is located at the top layer of an IMS core network architecture.
   Information stored in the HSS mainly includes: an identity (including public and private identities), a number, and address information that are of an IMS subscriber; a security context of the IMS subscriber: key information for subscriber network access authentication; routing information of the IMS subscriber: the HSS supports subscriber registration and stores subscriber location information; and service subscription information of the IMS subscriber that includes value-added service data of another application server (application server, AS).
6. Application server (AS): The application server provides IMS services, such as SMS, ring back tone, and call signature. The AS receives and processes SIP requests from the IMS.

It should be understood that the IMS is established based on concepts of a home network and a visited network. Generally, there are two scenarios based on whether an IMS subscriber roams. In one scenario, a first interaction point (for example, the P-CSCF) for accessing the IMS by the terminal device is located in the home network. In the other scenario, the P-CSCF is located in the visited network, which means that the terminal device roams in a manner in which the first interaction point for accessing the IMS is not in the home network. A manner provided in this application may be used in any one of the foregoing two scenarios. This is not specifically limited in this application.

It should be further understood that, for a detailed process of performing authentication between the terminal device and a network device, refer to the conventional technology. Details are not described herein. After the terminal device and the network device complete authentication, the terminal device and the P-CSCF obtain a shared key, where the shared key includes an integrity key (integrity key, IK) and a confidentiality key (confidentiality key, CK), and the terminal device and the P-CSCF establish an IP security (IP Security, IPsec) channel based on the IK and the CK.

The IPsec channel may include uplink transmission between the terminal device and the P-CSCF, and downlink transmission between the terminal device and the P-CSCF. In other words, the IPsec channel is bidirectional, including two directions: an uplink direction and a downlink direction. When uplink transmission and/or downlink transmission are/is performed between the terminal device and the P-CSCF, the terminal device and the P-CSCF each need to determine a salt value used for uplink transmission and/or a salt value used for downlink transmission, where the salt value is used to encrypt or decrypt information about uplink transmission and/or information about downlink transmission. How to ensure that a salt value determined by the terminal device and a salt value determined by the P-CSCF are the same in uplink transmission between the terminal device and the P-CSCF, and a salt value determined by the terminal device and a salt value determined by the P-CSCF are the same in downlink transmission between the terminal device and the P-CSCF is a hot issue currently studied in this field.

To facilitate understanding of the technical solutions provided in embodiments of this application, the following briefly describes terms used in this application.
1. A salt value (salt value) may be a random field, or may be a value generated according to a specific algorithm. The salt value is used to protect a password of transmitted information. The password is salted (mixed with random characters and concatenated in a password plaintext), to increase system complexity and obtain a stronger and more secure ciphertext digest value.
2. An initialization vector (initialization vector, IV) may be referred to as an initialization variable or an initial vector, and is an input value of a fixed length. A different bit sequence is randomly generated as the IV for each encryption. Generally, static IVs are not used. A value of the IV is determined according to different cryptographic algorithms. However, the value needs to be "unique", that is, a same initialization vector IV cannot be repeatedly used for a same key. Because an IV coordination mechanism is not provided in IPsec, a same initialization vector IV is used in both directions of an IPsec channel. As a result, an IV generated by a terminal device and an IV generated by a P-CSCF are the same.

Currently, a same key (that is, an IK and a CK), a same salt value, and a same IV are used for uplink transmission and downlink communication of the IPsec channel. It is assumed that when a same text is separately transmitted in an uplink direction and a downlink direction on the IPsec channel, the text passes through the same key, the same salt value, and the same initialization vector IV, that is, a same encrypted text is obtained in uplink transmission and downlink transmission, resulting in low communication security performance.

Because parameters used by the terminal device to generate salt values and parameters used by the P-CSCF to generate salt values are the same, salt values used for uplink transmission and salt values used for downlink transmission on the IPsec channel are the same, that is, a salt value determined by the terminal device for uplink transmission, a salt value determined by the terminal device for downlink transmission, a salt value determined by the P-CSCF for uplink transmission, and a salt value determined by the P-CSCF for downlink transmission are the same. For example, for uplink transmission between the terminal device and the P-CSCF, the terminal device determines that a salt value used for uplink transmission is a salt value #1, and the P-CSCF determines that a salt value used for uplink transmission is a salt value #1'; and for downlink transmission between the terminal device and the P-CSCF, the terminal device determines that a salt value used for downlink transmission is a salt value #2, and the P-CSCF determines that a salt value used for downlink transmission is a salt value #2'. The salt value #1, the salt value #1', the salt value #2, and the salt value #2' are the same.

For communication security of IPsec channel transmission, when the terminal device and the P-CSCF use a same key (an IK and a CK) for uplink transmission/downlink transmission on the IPsec channel, it needs to be ensured that a salt value used for uplink transmission between the terminal device and the P-CSCF is different from a salt value used for downlink transmission between the terminal device and the P-CSCF. To ensure that the salt value used for uplink transmission between the terminal device and the P-CSCF is different from the salt value used for downlink transmission between the terminal device and the P-CSCF, a security parameter index (security parameter index, SPI) in a security association (security association, SA) may be added to a salt value derivation parameter of the terminal device and the P-CSCF. The SA is unidirectional and unique, and the SPI is a unique identifier ID of the SA. To be specific, an SPI corresponding to uplink transmission is different from an SPI corresponding to downlink transmission. This ensures that a salt value used for uplink transmission is different from a salt value used for downlink transmission.

A salt value corresponding to uplink transmission is limited to be different from a salt value corresponding to downlink transmission. For example, for uplink transmission between the terminal device and the P-CSCF, the terminal device determines that the salt value used for uplink transmission is the salt value #1, and the P-CSCF determines that the salt value used for uplink transmission is the salt value #1'; and for downlink transmission between the terminal device and the P-CSCF, the terminal device determines that the salt value used for downlink transmission is the salt value #2, and the P-CSCF determines that the salt value used for downlink transmission is the salt value #2'. Salt values used for uplink transmission (the salt value #1 and the salt value #1') are different from salt values used for downlink transmission (the salt value #2 and the salt value #2'). In this case, whether the salt value #1 and the salt value #1' that are used for uplink transmission are the same is not considered, and whether the salt value #2 and the salt value #2' that are used for downlink transmission are the same is not considered.

The terminal device and the P-CSCF cannot ensure whether the salt value determined by the terminal device for uplink transmission and the salt value determined by the P-CSCF for uplink transmission are the same, or whether the salt value determined by the terminal device for downlink transmission and the salt value determined by the P-CSCF for downlink transmission are the same. In uplink transmission or downlink transmission, if a salt value determined by the terminal device for uplink/downlink transmission is different from a salt value determined by the P-CSCF for uplink/downlink transmission, the terminal device and the P-CSCF fail to encrypt and decrypt transmission information, thereby affecting communication performance.

For the foregoing existing technical problems, during uplink transmission and downlink transmission between the terminal device and the P-CSCF, how to ensure that the terminal device and the P-CSCF determine a same salt value in uplink transmission and determine a same salt value in downlink transmission is a technical problem to be resolved in this application.

This application provides a secure communication method, to ensure security of uplink and downlink communication between communication devices. For example, uplink transmission is performed between a first device and a second device, that is, a salt value determined by the first device for uplink transmission is the same as a salt value determined by the second device for uplink transmission, so that communication security between the first device and the second device can be improved.

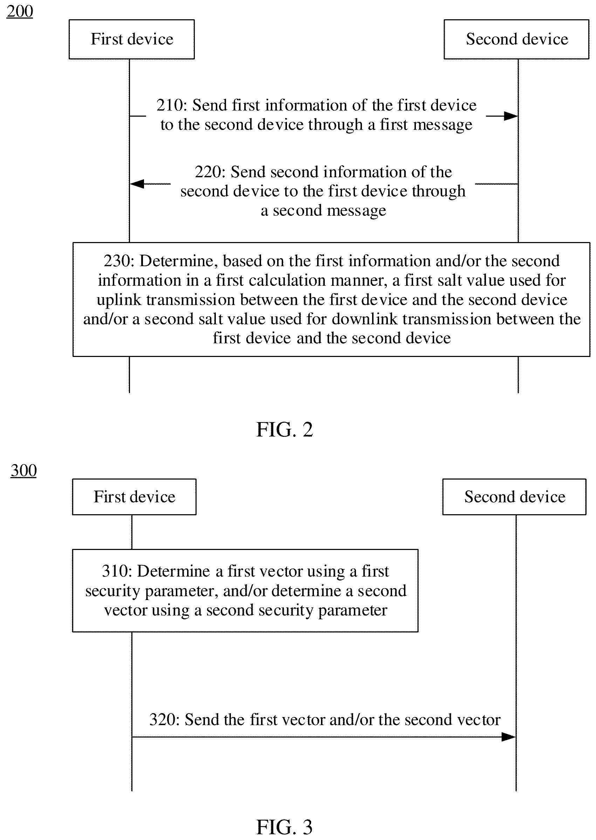

FIG. 2 is a schematic flowchart of a secure communication method according to an embodiment of this application.

210: The first device sends first information of the first device to the second device through a first message.

Correspondingly, the second device receives the first information that is of the first device and that is sent by the first device through the first message.

The first information includes a salt value calculation manner supported by the first device. The salt value calculation manner supported by the first device may be understood as a salt value calculation capability supported by the first device, or may be understood as an algorithm supported by the first device. Both the salt value calculation manner supported by the first device and the salt value calculation capability supported by the first device may be used to determine a salt value calculation manner of the first device. In this embodiment of this application, the salt value calculation manner supported by the first device is mainly used for description, and may be replaced with another description. This is not specifically limited in this application.

It should be understood that the first message includes one or more of a first port number, a first security parameter index SPI, a first internet protocol IP address, a first security algorithm list, and a first random number.

In a possible implementation, that the first device sends the first information to the second device through the first message may be as follows: The first device sends the first information to the second device through a separate indication, and the first information does not need to be carried in any other signaling or algorithm list.

In another possible implementation, the first information is carried in any one of the first port number, the first security parameter index SPI, the first internet protocol IP address, the first security algorithm list, and the first random number that are included in the first message, and is sent to the second device through the first message. For example, the first message includes the first port number and the first internet protocol IP address. The first port number may carry the first information, or the first IP address may carry the first information.

The first information can be represented in the form of a bit.

In an example, when the first information is carried in any one of the first port number, the first security parameter index SPI, the first internet protocol IP address, the first security algorithm list, and the first random number that are in the first message, it is assumed that the first information includes a first bit, the first bit is included in the first port number, and the first bit indicates the salt value calculation manner supported by the first device.

For example, it is assumed that a length of the first bit is 1 bit. When the first bit is 0, it indicates that the salt value calculation manner supported by the first device is a manner #1. When the first bit is 1, it indicates that the salt value calculation manner supported by the first device is a manner #2.

It should be understood that there may be two or more salt value calculation manners that may be supported by the first device in the future, and the first information may indicate, in a form of bits, the salt value calculation manners supported by the first device.

The first information may be represented in a form of an information element (information element, IE).

In an example, when the first information is carried in the first security algorithm list in the first message, the first information may indicate, in a form of an information element, the salt value calculation manner supported by the first device.

For example, the first information is an algorithm identifier or an indication of an algorithm, and/or the first information is an algorithm identifier or an indication of an encryption algorithm.

220: The first device receives a second message that includes second information and that is from the second device.

Correspondingly, the second device sends the second message that includes the second information to the first device.

The second information includes a salt value calculation manner supported by the second device. The salt value calculation manner supported by the second device may be understood as a salt value calculation capability supported by the second device, or may be understood as an algorithm supported by the second device. Both the salt value calculation manner supported by the second device and the salt value calculation capability supported by the second device may be used to determine a salt value calculation manner of the second device. In this embodiment of this application, the salt value calculation manner supported by the second device is mainly used for description, and may be replaced with another description. This is not specifically limited in this application.

It should be understood that the second message includes one or more of a second port number, a second security parameter index SPI, a second internet protocol IP address, a second security algorithm list, and a second random number.

In a possible implementation, the second device sends the second information to the first device through the second message, the second information may be sent by the second device to the first device through a separate indication, and the second information does not need to be carried in any other signaling or algorithm list.

In another possible implementation, the second information is carried in any one of the second port number, the second security parameter index SPI, the second internet protocol IP address, the second security algorithm list, and the second random number that are included in the second message, and is sent to the first device through the second message. For example, the second message includes the second port number and the second internet protocol IP address. The second port number may carry the second information, or the second IP address may carry the second information.

It should be understood that the second information may indicate the salt value calculation manner supported by the second device. Specifically, the second information may indicate the salt value calculation manner in a form of a bit or an information element. This is not specifically limited in this application.

It should be further understood that a transmission mode of the second information and a specific representation form of the second information in step 220 are similar to a transmission mode of the first information and a specific representation form of the first information in step 210. For details, refer to detailed examples in step 210. Details are not described herein again.

It should be noted that a sequence of step 210 and step 220 is not limited in this application. Step 210 may be performed before step 220, step 220 may be performed before step 210, or step 210 and step 220 are simultaneously performed. This is not specifically limited in this application.

It should be further noted that, when there is an obvious logical sequence relationship between step 210 and step 220, step 210 may be performed before step 220.

### Details are as follows:

In a possible implementation, after the second device receives the first message that is sent by the first device and that includes the first information, the second device performs step 220 only when the second device determines that the second device supports the salt value calculation manner of the first device, that is, the second device sends the second message that includes the second information to the first device.

When the second device determines that the second device supports the salt value calculation manner of the first device, the second device calculates, in the salt value calculation manner, a first salt value that is of the first device and that is supported by the second device.

Step 230: Based on the first information and/or the second information, determine the first salt value in a first calculation manner, and/or determine a second salt value in a second calculation manner.

Based on the first information and the second information, the first device and the second device may determine, in the first calculation manner, the first salt value used for uplink transmission between the first device and the second device, and/or determine, in the second calculation manner, the second salt value used for downlink transmission between the first device and the second device.

In a possible implementation, after the first device receives the second information, the first device determines a first calculation manner based on the salt value calculation manner that is supported by the second device and that is included in the second information and the salt value calculation manner supported by the first device. The first device determines, in the first calculation manner, a first salt value used for uplink transmission between the first device and the second device.

Similarly, after the second device receives the first information, the second device determines a first calculation manner based on the salt value calculation manner that is supported by the first device and that is included in the first information and the salt value calculation manner supported by the second device. The second device determines, in the first calculation manner, a first salt value used for uplink transmission between the first device and the second device.

In another possible implementation, after the first device receives the second information, the first device determines a second calculation manner based on the salt value calculation manner that is supported by the second device and that is included in the second information and the salt value calculation manner supported by the first device. The first device determines, in the second calculation manner, a second salt value used for downlink transmission between the first device and the second device.

Similarly, after the second device receives the first information, the second device determines a second calculation manner based on the salt value calculation manner that is supported by the first device and that is included in the first information and the salt value calculation manner supported by the second device. The second device determines, in the second calculation manner, a second salt value used for downlink transmission between the first device and the second device.

Based on the second information, the first device may determine the first salt value in the first calculation manner, and/or determine the second salt value in the second calculation manner.

In a possible implementation, after the first device receives the second information, the first device may determine that the second device supports the salt value calculation manner supported by the first device, and the first device may determine the first calculation manner and/or the second calculation manner based on the second information. The first device determines, in the first calculation manner, the first salt value used for uplink transmission between the first device and the second device; and/or the first device determines, in the second calculation manner, the second salt value used for downlink transmission between the first device and the second device.

In an example, it is assumed that the first device is a terminal device, and the second device is a P-CSCF. After the terminal device receives the second information from the P-CSCF, the terminal device determines that the P-CSCF has received the first information of the terminal device, and the P-CSCF supports the salt value calculation manner that is supported by the terminal device and that is in the first information. The terminal device may determine the first calculation manner and/or the second calculation manner based on the second information of the P-CSCF, and determine the first salt value in the first calculation manner and/or determine the second salt value in the second calculation manner.

Based on the first information, the first device may determine the first salt value in the first calculation manner, and/or determine the second salt value in the second calculation manner.

In a possible implementation, after the first device receives the second information of the second device, the first device determines, based on the second information, that the first device supports the salt value calculation manner supported by the second device, and the first device may determine the first calculation manner and/or the second calculation manner based on the first information. The first device determines, in the first calculation manner, the first salt value used for uplink transmission between the first device and the second device; and/or the first device determines, in the second calculation manner, the second salt value used for downlink transmission between the first device and the second device.

In an example, it is assumed that the first device is a P-CSCF, and the second device is a terminal device. After the P-CSCF receives the second information from the terminal device, the P-CSCF determines, based on the salt value calculation manner that is supported by the terminal device and that is in the second information and the salt value calculation manner that is supported by the P-CSCF and that is in the first information, that the P-CSCF supports the salt value calculation manner supported by the terminal device. The P-CSCF may determine the first calculation manner and/or the second calculation manner based on the first information, and determine the first salt value in the first calculation manner and/or determine the second salt value in the second calculation manner.

It should be understood that when the first device and the second device determine the first salt value and/or the second salt value in the first calculation manner and/or the second calculation manner, different parameters are used (for example, an uplink port number and a downlink port number are different), and internal algorithms of the first calculation manner and the second calculation manner may be the same. In other words, the first salt value and the second salt value that are determined by the first device are different from those determined by the second device. When it is ensured that a salt value used for uplink transmission between the first device and the second device is different from a salt value used for downlink transmission between the first device and the second device, during uplink transmission between the first device and the second device, a salt value determined by the first device is the same as a salt value determined by the second device; and during downlink transmission between the first device and the second device, a salt value determined by the first device is the same as a salt value determined by the second device. In this way, security of uplink and downlink communication between the first device and the second device is ensured, and an encryption and decryption failure caused by using different keys by the first device and the second device is further avoided.

In a possible implementation, that the first device and the second device determine the first salt value in the first calculation manner may include: The first device and the second device determine the first salt value using a first security parameter. The first security parameter includes one or more of the following: a direction indicator of uplink transmission, a direction identifier of uplink transmission, an uplink port number of the first device and/or an uplink port number of the second device, an uplink IP address of the first device and/or an uplink IP address of the second device, an uplink SPI of the first device and/or an uplink SPI of the second device, an uplink counter of the first device and/or an uplink counter of the second device, and a random number of the first device and/or a random number of the second device.

The first device and the second device can determine the direction indicator of uplink transmission, the direction identifier of uplink transmission, and the random number. Alternatively, the direction indicator of uplink transmission and the direction identifier of uplink transmission may be agreed on. This is not specifically limited in this application.

One or more of the uplink port number of the first device, the uplink IP address of the first device, the uplink SPI of the first device, the uplink counter of the first device, and the random number of the first device may be sent by the first device to the second device through the first message. One or more of the uplink port number of the second device, the uplink IP address of the second device, the uplink SPI of the second device, the uplink counter of the second device, and the random number of the second device may be sent by the second device to the first device through the second message.

In a possible implementation, that the first device and the second device determine the second salt value in the second calculation manner may include: The first device and the second device determine the second salt value using a second security parameter. The second security parameter includes one or more of the following: a direction indicator of downlink transmission, a direction identifier of downlink transmission, a downlink port number of the first device and/or a downlink port number of the second device, a downlink IP address of the first device and/or a downlink IP address of the second device, a downlink SPI of the first device and/or a downlink SPI of the second device, a downlink counter of the first device and/or a downlink counter of the second device, and a random number of the first device and/or a random number of the second device.

The first device and the second device can determine the direction indicator of downlink transmission, the direction identifier of the downlink transmission, and the random number. Alternatively, the direction indicator of downlink transmission and the direction identifier of downlink transmission may be agreed on. This is not specifically limited in this application.

One or more of the downlink port number of the first device, the downlink IP address of the first device, the downlink SPI of the first device, the downlink counter of the first device, and the random number of the first device may be sent by the first device to the second device through the first message. One or more of the downlink port number of the second device, the downlink IP address of the second device, the downlink SPI of the second device, the uplink counter of the second device, and the random number of the second device may be sent by the second device to the first device through the second message.

In an example, it is assumed that the salt value calculation manner supported by the first device includes a manner #1 and a manner #2, and the salt value calculation manner supported by the second device includes the manner #2. In this case, the first device and the second device determine, based on the salt value calculation manner supported by the first device and the salt value calculation manner supported by the second device, that the first calculation manner is the manner #2, and the first device and the second device determine, in the manner #2, the first salt value used for uplink transmission between the first device and the second device. The first device and the second device may respectively calculate the first salt value in the manner #2 based on the direction indicator of uplink transmission, the direction identifier of the uplink transmission, the uplink port number of the first device, and the uplink port of the second device.

In another example, it is assumed that the salt value calculation manner supported by the first device includes a manner #1, and the salt value calculation manner supported by the second device includes the manner #1. In this case, the first device and the second device determine, based on the salt value calculation manner supported by the first device and the salt value calculation manner supported by the second device, that the second calculation manner is the manner #1, and the first device and the second device determine, in the manner #1, the second salt value used for downlink transmission between the first device and the second device. The first device and the second device may respectively calculate the second salt value in the manner #1 based on the direction identifier of downlink transmission, the downlink SPI of the first device, the downlink SPI of the second device, the downlink counter of the first device, and the downlink counter of the second device.

It should be understood that determining the first salt value using the first security parameter and determining the second salt value using the second security parameter can distinguish between uplink transmission and downlink transmission between the first device and the second device. A person skilled in the art may further determine the first salt value and the second salt value using another parameter that can be used to distinguish between uplink transmission and downlink transmission between the first device and the second device.

It should be further understood that, in this application, the first device may be a terminal device, and the second device may be a P-CSCF; or the first device is a P-CSCF, and the second device is a terminal device.

In an example, when the first device is a terminal device, and the second device is a P-CSCF, in uplink transmission between the first device and the second device, the terminal device may serve as a client (client), and the P-CSCF may serve as a server (server); and in downlink transmission between the first device and the second device, the terminal device may serve as a server (server), and the P-CSCF may serve as a client (client). For example, in uplink transmission between the first device and the second device, a value of an uplink SPI of the terminal device may be represented as SPI_uc, where SPI_uc represents an SPI value of the terminal device serving as a client; and a value of an uplink SPI of the P-CSCF may be represented as SPI_ps, where SPI_ps represents an SPI value of the P-CSCF serving as a server.

According to the method shown in FIG. 2, the first device and the second device exchange the salt value calculation manner that can be supported by each other, and may determine the first salt value used for uplink transmission between the first device and the second device in the first calculation manner and/or determine the first salt value used for downlink transmission between the first device and the second device in the second calculation manner. In downlink or uplink transmission between the first device and the second device, the first device and the second device may obtain a same salt value, that is, it can be ensured that even if either of the first device and the second device is upgraded or another configuration changes, the first device and the second device can still determine a calculation manner based on the salt value calculation manner supported by the first device and the salt value calculation manner supported by the second device, and salt values obtained by the first device and the second device in the calculation manner are the same. This avoids an information encryption and decryption failure caused by different salt values determined by the first device and the second device in uplink transmission or downlink transmission between the first device and the second device.

In addition, according to the method in this embodiment of this application, the first salt value used for uplink transmission between the first device and the second device is different from the second salt value used for downlink transmission between the first device and the second device, thereby improving uplink and downlink security performance.

The method shown in FIG. 2 further includes the following steps.

240: The first device determines a first vector used for uplink transmission using the first security parameter, and/or determines a second vector used for downlink transmission using the second security parameter.

250: The first device sends the first vector and/or the second vector to the second device.

It should be understood that the first vector is different from the second vector.

The first device determines, using the first security parameter, the first vector used for uplink transmission, where the first security parameter is a parameter related to uplink transmission. The first device determines, using the second security parameter, the second vector used for downlink transmission, where the second security parameter is a parameter related to downlink transmission. If the first security parameter is different from the second security parameter, the first vector is different from the second vector.

It should be further understood that step 240 and step 250 are similar to step 310 and step 330 in FIG. 3. For details, refer to detailed descriptions in FIG. 3. To avoid redundancy, details are not described herein.

FIG. 3 is a schematic flowchart of another secure communication method according to an embodiment of this application.

310: A first device determines a first vector using a first security parameter, and/or the first device determines a second vector using a second security parameter.

The first vector is used for uplink transmission between the first device and a second device, and the second vector is used for downlink transmission between the first device and the second device.

The first security parameter includes one or more of the following: a direction indicator of uplink transmission, a direction identifier of uplink transmission, an uplink port number of the first device and/or an uplink port number of the second device, an uplink IP address of the first device and/or an uplink IP address of the second device, an uplink SPI of the first device and/or an uplink SPI of the second device, an uplink counter of the first device and/or an uplink counter of the second device, and a random number of the first device and/or a random number of the second device. The second security parameter includes one or more of the following: a direction indicator of downlink transmission, a direction identifier of downlink transmission, a downlink port number of the first device and/or a downlink port number of the second device, a downlink IP address of the first device and/or a downlink IP address of the second device, a downlink SPI of the first device and/or a downlink SPI of the second device, a downlink counter of the first device and/or a downlink counter of the second device, and a random number of the first device and/or a random number of the second device.

It should be understood that the first security parameter and the second security parameter are parameters used to distinguish between uplink transmission and downlink transmission between the first device and the second device. That is, the first security parameter is different from the second security parameter. For example, the uplink port number of the first device included in the first security parameter is different from the downlink port number of the first device included in the second security parameter, and the uplink counter of the first device included in the first security parameter is different from the downlink counter of the first device included in the second security parameter.

It should be further understood that, if the first security parameter used to determine the first vector is different from the second security parameter used to determine the second vector, the first vector is different from the second vector.

Optionally, the first vector is an initialization vector IV that is determined by the first device and that is used for uplink transmission, and the second vector is an initialization vector IV that is determined by the first device and that is used for downlink transmission.

320: The first device sends the first vector and/or the second vector to the second device.

Specifically, after the first device determines the first vector and/or the second vector, the first device sends the first vector and/or the second vector to the second device.

Optionally, the first vector is used by the second device to perform decryption processing on a received encrypted message sent by the first device through an uplink communication link. The second vector is used by the second device to perform encryption processing on a message to be sent by the first device through a downlink communication link.

It should be understood that the first vector and the encrypted message sent by the first device to the second device may be transmitted to the second device in a same message, the first vector may be carried in other signaling or another algorithm list and sent to the second device, or the first vector may be sent to the second device through separate indication information. This is not specifically limited in this application.

According to the method shown in FIG. 3, the first device determines the first vector and/or the second vector using related parameters (for example, port numbers, direction indicators, direction identifiers, IP addresses, SPIs, counters, and random numbers) for distinguishing between uplink and downlink transmission, and sends the first vector and/or the second vector to the second device. The first vector is determined based on the first security parameter related to uplink transmission, and the second vector is determined based on the second security parameter related to downlink transmission, that is, the first vector corresponding to uplink transmission between the first device and the second device is different from the second vector corresponding to downlink transmission between the first device and the second device. This can ensure security of uplink and downlink communication between the first device and the second device.

It should be understood that sequence numbers of processes do not mean execution sequences in embodiments of this application. The execution sequences of the processes should be determined according to functions and internal logic of the processes, and should not constitute any limitation on implementation processes of embodiments of this application.

Embodiments described in this specification may be independent solutions, or may be combined based on internal logic. All of these solutions fall within the protection scope of this application.

It may be understood that, in the foregoing method embodiments, a method and an operation implemented in a terminal side may also be implemented by a component (for example, a chip or a circuit) that can be used in a terminal side device, and a method and an operation implemented in a network side may also be implemented by a component (for example, a chip or a circuit) that can be used in a network side device.

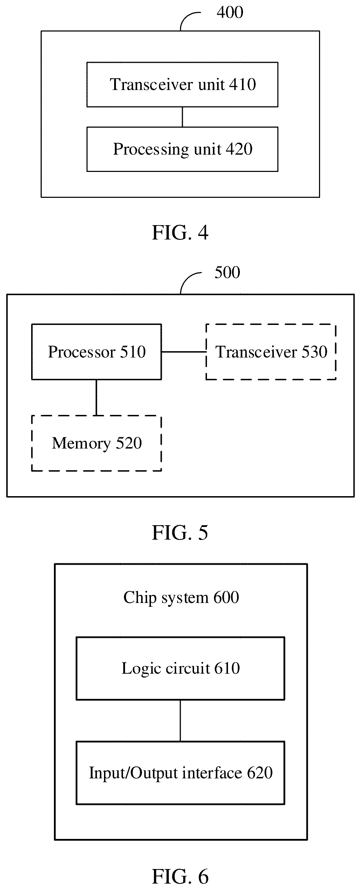

The foregoing describes in detail the methods provided in embodiments of this application with reference to FIG. 2 and FIG. 3. The following describes in detail secure communication apparatuses provided in embodiments of this application with reference to FIG. 4 to FIG. 6. It should be understood that descriptions of apparatus embodiments correspond to descriptions of method embodiments. Therefore, for content that is not described in detail, refer to the method embodiments. For brevity, details are not described herein again.

The foregoing mainly describes the solutions provided in embodiments of this application from a perspective of device interaction. It may be understood that, to implement the foregoing functions, each device, such as a transmitter device or a receiver device, includes a corresponding hardware structure and/or software module for performing each function. A person skilled in the art should be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first device or the second device may be divided into functional modules based on the foregoing method examples. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, division into modules is an example and is merely logical function division. During actual implementation, another division manner may be used. The following uses an example in which functional modules are obtained through division based on corresponding functions for description.

FIG. 4 is a block diagram of a secure communication apparatus according to an embodiment of this application. The apparatus 400 includes a transceiver unit 410, and the transceiver unit 410 may be configured to implement a corresponding communication function. The transceiver unit 410 may also be referred to as a communication interface or a communication unit.

Optionally, the apparatus 400 may further include a processing unit 420, and the processing unit 420 may be configured to perform data processing.

Optionally, the apparatus 400 further includes a storage unit. The storage unit may be configured to store instructions and/or data. The processing unit 420 may read the instructions and/or the data in the storage unit, to enable the apparatus to implement actions of different terminal devices in the foregoing method embodiments, for example, actions of the first device/actions of the second device.

The apparatus 400 may be configured to perform actions performed by the first device or the second device in the foregoing method embodiments. In this case, the apparatus 400 may be the first device, a component of the first device, the second device, or a component of the second device. The transceiver unit 410 is configured to perform receiving/sending-related operations of the first device or the second device in the foregoing method embodiments, and the processing unit 420 is configured to perform processing-related operations of the first device or the second device in the foregoing method embodiments.

It should be further understood that the apparatus 400 herein is embodied in a form of a functional unit. The term "unit" herein may be an application-specific integrated circuit (application-specific integrated circuit, ASIC), an electronic circuit, a processor (such as a shared processor, a dedicated processor, or a group processor) configured to execute one or more software or firmware programs and a memory, a merged logic circuit, and/or another appropriate component that supports the described function. In an optional example, a person skilled in the art may understand that the apparatus 400 may be specifically the first device in the foregoing embodiments, and may be configured to perform procedures and/or steps corresponding to the first device in the foregoing method embodiments, or the apparatus 400 may be specifically the second device in the foregoing embodiments, may be configured to perform procedures and/or steps corresponding to the second device in the foregoing method embodiments. To avoid repetition, details are not described herein again.

The apparatus 400 in the foregoing solutions has a function of implementing corresponding steps performed by the first device in the foregoing methods, or the apparatus 400 in the foregoing solutions has a function of implementing corresponding steps performed by the second device in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving and sending operations and a related processing operation in the method embodiments.

In addition, the transceiver unit 410 may alternatively be a transceiver circuit (for example, may include a receiving circuit and a sending circuit), and the processing unit may be a processing circuit.

It should be noted that the apparatus in FIG. 4 may be a network element or a device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

As shown in FIG. 5, an embodiment of this application provides another communication apparatus 500. The apparatus 500 includes a processor 510, the processor 510 is coupled to a memory 520, the memory 520 is configured to store a computer program or instructions and/or data, and the processor 510 is configured to: execute the computer program or the instructions stored in the memory 520, or read the data stored in the memory 520, to perform the methods in the foregoing method embodiments.

Optionally, there are one or more processors 510.

Optionally, there are one or more memories 520.

Optionally, the memory 520 and the processor 510 are integrated together or separately disposed.

Optionally, as shown in FIG. 5, the apparatus 500 further includes a transceiver 530, and the transceiver 1130 is configured to receive and/or send a signal. For example, the processor 510 is configured to control the transceiver 530 to receive and/or send a signal.

In a solution, the apparatus 500 is configured to implement operations performed by the first device in the foregoing method embodiments.

For example, the processor 510 is configured to execute the computer program or the instructions stored in the memory 520, to implement related operations of a first control plane device in the foregoing method embodiments, for example, the first device or the second device in the embodiment shown in FIG. 2 or FIG. 3.

It should be understood that, the processor mentioned in this embodiment of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in this embodiment of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification is intended to include, but is not limited to, these memories and any other appropriate type of memory.

As shown in FIG. 6, an embodiment of this application provides a chip system 600. The chip system 600 (or may be referred to as a processing system) includes a logic circuit 610 and an input/output interface (input/output interface) 620.

The logic circuit 610 may be a processing circuit in the chip system 600. The logic circuit 610 may be coupled to a storage unit, and invoke instructions in the storage unit, to enable the chip system 600 to implement the methods and functions in embodiments of this application. The input/output interface 620 may be an input/output circuit in the chip system 600, and outputs information processed by the chip system 600, or inputs to-be-processed data or signaling information to the chip system 600 for processing.

In a solution, the chip system 600 is configured to implement operations performed by the first device or the second device in the foregoing method embodiments.

For example, the logic circuit 610 is configured to implement processing-related operations of the first device or processing-related operations of the second device in the foregoing method embodiments, for example, processing-related operations of the first device or the second device in the embodiment shown in FIG. 2 or FIG. 3; and the input/output interface 620 is configured to implement sending and/or receiving-related operations of the first device or sending and/or receiving-related operations of the second device in the foregoing method embodiments.

An embodiment of this application further provides a computer-readable storage medium. The computer-readable storage medium stores computer instructions used to implement the methods performed by the first device and the second device in the foregoing method embodiments.

For example, when the computer program is executed by a computer, the computer is enabled to implement the methods performed by the first device and the second device in the foregoing method embodiments.

An embodiment of this application further provides a computer program product including instructions. When the instructions are executed by a computer, the methods performed by the first device and the second device in the foregoing method embodiments are implemented.

For explanations and beneficial effect of related content in any one of the apparatuses provided above, refer to a corresponding method embodiment provided above. Details are not described herein again.

In the several embodiments provided in this application, it should be understood that the disclosed apparatus and method may be implemented in other manners. For example, the described apparatus embodiments are merely examples. For example, division into the units is merely logical function division and may be another division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When the foregoing embodiments are implemented by using software, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A secure communication method, comprising:
sending, by a first device, first information of the first device to a second device through a first message, wherein the first message comprises one or more of a first port number, a first security parameter index SPI, a first internet protocol IP address, a first security algorithm list, and a first random number;
receiving, by the first device, a second message that comprises second information and that is from the second device, wherein the second message comprises one or more of a second port number, a second security parameter index SPI, a second internet protocol IP address, a second security algorithm list, and a second random number; and
based on the first information and/or the second information, determining, by the first device in a first calculation manner, a first salt value used for uplink transmission between the first device and the second device, and/or determining, in a second calculation manner, a second salt value used for downlink transmission between the first device and the second device.

2. The method according to claim 1, wherein the first information is comprised in one of the first port number, the first security parameter index SPI, the first internet protocol IP address, the first security algorithm list, and the first random number that are in the first message; and/or
the second information is comprised in one of the second port number, the second security parameter index SPI, the second internet protocol IP address, the second security algorithm list, and the second random number that are in the second message.

3. The method according to claim 1 or 2, wherein the determining the first salt value in the first calculation manner comprises:
calculating the first salt value using a first security parameter, wherein
the first security parameter comprises one or more of the following: a direction indicator of uplink transmission, a direction identifier of uplink transmission, an uplink port number of the first device and/or an uplink port number of the second device, an uplink IP address of the first device and/or an uplink IP address of the second device, an uplink SPI of the first device and/or an uplink SPI of the second device, an uplink counter of the first device and/or an uplink counter of the second device, and a random number of the first device and/or a random number of the second device; and
the determining the second salt value in the second calculation manner comprises:
calculating the second salt value using a second security parameter, wherein
the second security parameter comprises one or more of the following: a direction indicator of downlink transmission, a direction identifier of downlink transmission, a downlink port number of the first device and/or a downlink port number of the second device, a downlink IP address of the first device and/or a downlink IP address of the second device, a downlink SPI of the first device and/or a downlink SPI of the second device, a downlink counter of the first device and/or a downlink counter of the second device, and a random number of the first device and/or a random number of the second device.

4. The method according to claim 3, wherein the method further comprises:
determining, by the first device, a first vector used for uplink transmission using the first security parameter, and/or determining a second vector used for downlink transmission using the second security parameter; and
sending, by the first device, the first vector and/or the second vector to the second device.

5. A secure communication method, comprising:
sending, by a first device, first information of the first device to a second device through a first message, wherein the first message comprises one or more of a first port number, a first security parameter index SPI, a first internet protocol IP address, a first security algorithm list, and a first random number;
receiving, by the second device, the first information of the first device sent by the first device through the first message;
receiving, by the first device, a second message that comprises second information and that is from the second device, wherein the second message comprises one or more of a second port number, a second security parameter index SPI, a second internet protocol IP address, a second security algorithm list, and a second random number; and
based on the first information and/or the second information, determining, by the first device in a first calculation manner, a first salt value used for uplink transmission between the first device and the second device, and/or determining, in a second calculation manner, a second salt value used for downlink transmission between the first device and the second device.

6. A secure communication method, comprising:
determining, by a first device, a first vector used for uplink transmission between the first device and a second device using a first security parameter; and
sending, by the first device, the first vector to the second device;
and/or
determining, by the first device, a second vector used for downlink transmission between the first device and the second device using a second security parameter; and
sending, by the first device, the second vector to the second device, wherein
the first security parameter comprises one or more of the following: a direction indicator of uplink transmission, a direction identifier of uplink transmission, an uplink port number of the first device and/or an uplink port number of the second device, an uplink IP address of the first device and/or an uplink IP address of the second device, an uplink SPI of the first device and/or an uplink SPI of the second device, an uplink counter of the first device and/or an uplink counter of the second device, and a random number of the first device and/or a random number of the second device; and the second security parameter comprises one or more of the following: a direction indicator of downlink transmission, a direction identifier of downlink transmission, a downlink port number of the first device and/or a downlink port number of the second device, a downlink IP address of the first device and/or a downlink IP address of the second device, a downlink SPI of the first device and/or a downlink SPI of the second device, a downlink counter of the first device and/or a downlink counter of the second device, and a random number of the first device and/or a random number of the second device.

7. A secure communication method, comprising:
determining, by a first device, a first vector used for uplink transmission between the first device and a second device using a first security parameter;
sending, by the first device, the first vector to the second device; and
receiving, by the second device, the first vector from the first device;
and/or
determining, by the first device, a second vector used for downlink transmission between the first device and the second device using a second security parameter;
sending, by the first device, the second vector to the second device; and
receiving, by the second device, the second vector from the first device, wherein
the first security parameter comprises one or more of the following: a direction indicator of uplink transmission, a direction identifier of uplink transmission, an uplink port number of the first device and/or an uplink port number of the second device, an uplink IP address of the first device and/or an uplink IP address of the second device, an uplink SPI of the first device and/or an uplink SPI of the second device, an uplink counter of the first device and/or an uplink counter of the second device, and a random number of the first device and/or a random number of the second device; and the second security parameter comprises one or more of the following: a direction indicator of downlink transmission, a direction identifier of downlink transmission, a downlink port number of the first device and/or a downlink port number of the second device, a downlink IP address of the first device and/or a downlink IP address of the second device, a downlink SPI of the first device and/or a downlink SPI of the second device, a downlink counter of the first device and/or a downlink counter of the second device, and a random number of the first device and/or a random number of the second device.

8. The method according to any one of claims 1 to 7, wherein the first device is a terminal device, or a chip or a circuit disposed in the terminal device by the first device, and the second device is a network device, or a chip or a circuit disposed in the network device by the second device;
or
the first device is the network device, or a chip or a circuit disposed in the network device by the first device, and the second device is the terminal device, or a chip or a circuit disposed in the terminal device by the second device.

9. A secure communication apparatus, wherein the secure communication apparatus comprises a unit and a module that are configured to perform the method according to any one of claims 1 to 8.

10. A secure communication apparatus, comprising a processor, wherein the processor is coupled to a memory, the memory is configured to store instructions, and the processor is configured to read the instructions stored in the memory, to enable the secure communication apparatus to implement the method according to any one of claims 1 to 8.

11. A computer-readable storage medium, wherein the computer-readable storage medium stores instructions, and when the instructions are run on a computer, the computer is enabled to perform the method according to any one of claims 1 to 8.

12. A computer program product, wherein the computer program product comprises instructions used to perform the method according to any one of claims 1 to 8.

13. A chip, wherein the chip comprises a processor and a communication interface, and when the processor reads a computer program or instructions through the communication interface and runs the computer program or the instructions, the communication apparatus is enabled to perform the method according to any one of claims 1 to 8.

14. A communication system, comprising a first device and a second device, wherein the first device is configured to perform the method according to any one of claims 1 to 4, and the second device is configured to:
receive first information of the first device through a first message, wherein the first message comprises one or more of a first port number, a first security parameter index SPI, a first internet protocol IP address, a first security algorithm list, and a first random number; and
send a second message that comprises second information to the first device, wherein the second message comprises one or more of a second port number, a second security parameter index SPI, a second internet protocol IP address, a second security algorithm list, and a second random number.

15. A communication system, comprising a first device and a second device, wherein the first device is configured to perform the method according to claim 6, and the second device is configured to receive a first vector and/or a second vector.
